Europäisches Patentamt

European Patent Office

Office européen des brevets

(11) Publication number: **0 278 968 B1**

## EUROPEAN PATENT SPECIFICATION

(45) Date of publication of patent specification: **29.12.93**

(51) Int. Cl.5: **G02F 1/29**, G02F 3/00, G02F 1/135

(21) Application number: **87905679.4**

(22) Date of filing: **20.07.87**

(86) International application number:
**PCT/US87/01709**

(87) International publication number:
**WO 88/01753 (10.03.88 88/06)**

(54) **LIGHT DEFLECTOR APPARATUS AND METHOD.**

(30) Priority: **25.08.86 US 900053**

(43) Date of publication of application:
**24.08.88 Bulletin 88/34**

(45) Publication of the grant of the patent:
**29.12.93 Bulletin 93/52**

(84) Designated Contracting States:
**DE FR GB IT NL**

(56) References cited:
**EP-A- 0 074 144**
**EP-A- 0 121 449**
**FR-A- 2 254 057**
**US-A- 4 351 589**

**RADIO ENGINEERING AND ELECTRONIC PHYSICS, vol. 19, no. 8, August 1974; M.G.NIKULIN et al.: "An electrooptic crystal diffraction deflector", pages 157-159**

**IEEE JOURNAL OF OUANTUM ELECTRONICS, vol OE-9, no. 8, August 1973; Y.NINOMIYA: "Ultrahigh resolving electrooptic prism array light deflectors", pages 791-795**

**JOURNAL OF OPTICS, vol. 15, no. 5, September/October 1984, Paris, FR; J.P.HERRIAU et al.: "Commutateur optique bidimensionnel par réseaux holographiques photoinduits", pages 314-318**

(73) Proprietor: **Hughes Aircraft Company**
**7200 Hughes Terrace**
**P.O. Box 45066**
**Los Angeles, California 90045-0066(US)**

(72) Inventor: **OWECHKO, Yuri**
**30 Ellis Place**
**Newbury Park, CA 91320(US)**

(74) Representative: **KUHNEN, WACKER & PARTNER**
**Alois-Steinecker-Strasse 22**
**D-85354 Freising (DE)**

## Description

This invention relates to the characterization and processing of optical beams, and more particularly to a system and method for deflecting light to convert the spatial intensity spectrum of a light beam to a positional mapping, or to implement a switching mechanism.

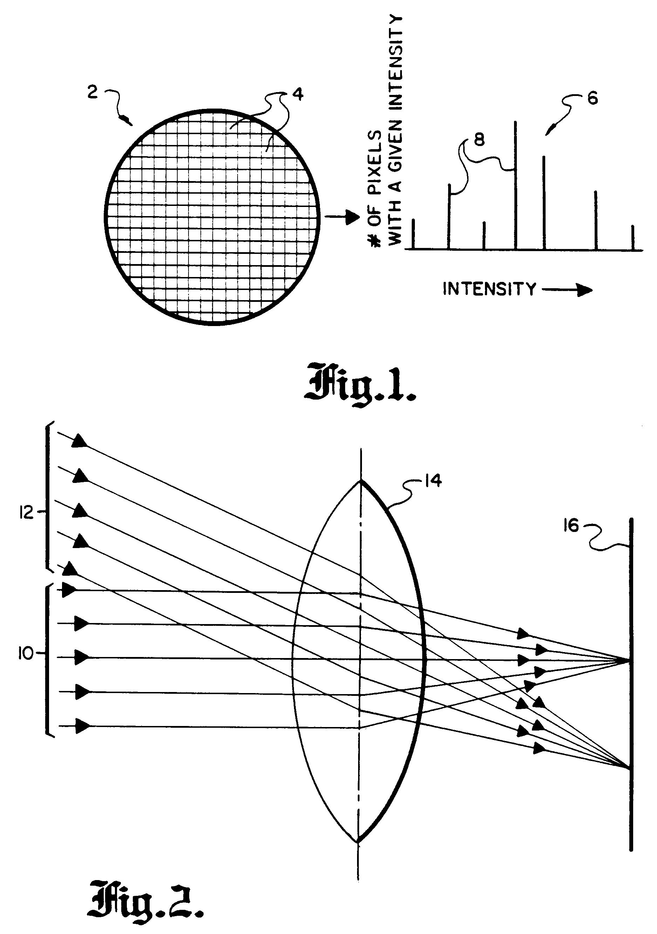

The distribution of optical intensities across a single light beam or a series of separate light beams may form the basis for optical computing and logic processing by first converting the distribution of light intensities to a positional mapping, and then operating upon the signal at each different position to perform the desired computing or processing. The cross-section of a light beam 2 can be envisioned as an aggregation of a large number of pixel locations 4, as illustrated in FIG. 1. Because the pattern of light intensity at each different pixel location can be imaged or mapped elsewhere in the system, this pattern may be employed as an information coding system. For various computing and logic processing purposes it is desirable to group the various pixels by their respective optical intensity levels, rather than by their spatial positions within the beam. In other words, it is desirable to be able to convert the spatial intensity pattern of beam 2 to a positional mapping 6, in which all pixels having a common optical intensity are mapped to a common position on a distance spectrum. In the example of FIG. 1 it is assumed, for a simple special case, that the optical intensity levels are grouped into a limited number of discrete levels, rather than extending over a continuum of intensities. Thus, the mapping process may yield a number of discrete spikes 8 which are separated by positional distance, the height of each spike varying with the number of pixels having an optical intensity corresponding to the position of the spike. This representation is called a histogram. Where separate input light beams are presented, such as in discrete optical fibers, it may likewise be desirable to switch the separate beams among various output locations in accordance with their intensities.

A system which accomplishes the desired intensity-to-position mapping and corresponds to the preamble of claim 1, is described in U.S. Patent No. 4,351,589. The patent discloses the use of liquid crystals to produce variable gratings, which diffract incoming light by varying amounts depending upon the grating period. The optical intensities at the different locations in an input light beam control the grating period at corresponding locations in the liquid crystal media. The variable gratings were employed to convert the spatial intensity distribution within the input beam to a positional mapping of intensities, from which the desired computing and logic functions could be accomplished. Applications of this variable grating mode (VGM) device are disclosed in an article by B. H. Soffer et al., "Optical Computing With Variable Grating Mode Liquid Crystal Devices", 1980 International Optical Computing Conference, SPIE Vol. 232, pages 128-136.

While it facilitates optical data and image processing and optical logic and computing, the variable grating device disclosed in the patent in its present state of development has somewhat slow response times, and works only at low temporal frequencies.

A paper has been published disclosing a single prismatic wedge of liquid crystal, across which a variable voltage is applied to deflect a light beam, M. A. Muriel and J. A. Martin-Pereda, "Digital Light Beam Deflector with Liquid Crystals", 1980 European Conference on Optical Systems and Applications (Utrecht), SPIE Vol. 236, pages 386-388. The amount of deflection which a light ray undergoes after crossing the wedge is said to depend upon the applied voltage. However, the light was subjected to a large amount of scattering in transit through the wedge, and the single cell disclosed was not suitable for use in intensity-to-positional mapping. The response time is also slow.

A related technological issue involved an attempt to control the focal length of a lens by means of an applied voltage. This was described in an article by Susumu Sato, "Liquid-Crystal Lens-Cells with Variable Focal Length", Japanese Journal of Applied Physics, Vol. 18, No. 9, September 1979, pages 1679-1684. In this approach liquid crystal cells shaped like a plano-convex lens or a plano-concave lens were prepared. Electric or magnetic fields were applied across the lens-cell to vary its focal length. The authors encountered excessive light scattering and slow response time due to the thickness of the liquid crystal cell.

In view of the above problems associated with the prior art, an object of the present invention is to provide a light deflection system and method capable of mapping the spatial optical intensities within a single light beam or a series of light beams onto a positional array, or for switching among light beams, with a faster response time than available in the prior art, without excessive light scattering, and with an improved temporal frequency response.

These objects are accomplished in the present invention as defined in the claims, i.e. by providing an array of voltage gradient modules, with each module comprising a layer of electro-optic material such as liquid crystals and a means for establishing a variable spatial voltage gradient and electric field across the material in a direction transverse to the input light. The voltage gradients and fields of respective modules are varied in accordance with the optical intensities at corresponding locations in the input light. The modules operate primarily by a diffractive process to produce optical outputs which vary in direction in accordance with the modules' voltage gradient and field variations, thereby mapping the modules' input optical intensities onto the directions of their optical outputs. A lens in the output path focuses the directionally mapped module outputs to a positional mapping of the input light intensities in the focal plane of the lens. The processed input light intensity distribution is reconstructed in the image plane of the lens.

The voltage gradients and fields are created by the interaction between an array of interdigitated electrodes on one side of the electro-optic layer, and a counter electrode on the other side of the layer which may be either a planar electrode or a second array of interdigitated electrodes. Voltages are applied to the electrodes on either side of the electro-optic layer to establish the desired spatial voltage gradients through the layer.

The invention may be implemented in a variety of specific applications. These include a reflective liquid crystal light valve, a transmissive liquid crystal light valve, and an optical switch adapted to switch a matrix of input light beams among a plurality of output locations. The invention is capable of accomplishing all of the non-linear optical functions described in Patent No. 4,351,589, mentioned above, but with a higher speed and better resolution. The invention is particularly suited for optical information processing applications.

These and other features and advantages of the invention will be apparent to those skilled in the art from the following detailed description of preferred embodiments, taken together with the accompanying drawings, in which:

FIG. 1 is an illustrative diagram of the intensity-to-position mapping, described above, achieved by the invention;

FIG. 2 is a side elevation view of a lens and ray diagram illustrating one of the principles of the invention, that angles and positions can be mapped to each other;

FIG. 3 is a side elevation view illustrating the voltage gradient modules employed in the invention;

FIG. 4a is a simplified sectional view illustrating one electrode arrangement for establishing the voltage gradients;

FIG. 4b is a graph indicating the voltage gradients and fields established by the embodiment of FIG. 4a;

FIG. 5 is a simplified sectional view of another electrode arrangement;

FIG. 6 is a sectional view of an embodiment in which input light is transmitted through a liquid crystal light valve to achieve positional mapping;

FIG. 7 is a sectional view of another embodiment in which a reflective liquid crystal light valve utilizes separate input and readout beams to achieve positional mapping;

FIG. 8 is a fragmentary plan view of an electrode section;

FIGs. 9 and 10 are graphs of typical output light distributions for two different input levels; and

FIG. 11 is a perspective view of an optical switch constructed in accordance with the present invention.

The present invention makes use of a novel light deflection mechanism to achieve a positional mapping of a spatial optical intensity profile with subsequent reconstruction of the profile, with an intermediate directional mapping. To illustrate the transformation of the intermediate directional mapping to the final positional mapping, two light beams 10 and 12 are shown directed upon a lens 14 in FIG. 2. Each beam is collimated and occupies a substantial cross-sectional area, as indicated by the multiple ray lines for each beam. So long as the rays of each beam are parallel, they are focused by lens 14 essentially to points on the lens focal plane 16. The focal position of each beam on the focal plane will depend upon its direction relative to the optical axis of the lens. Beam 10, which is parallel to the lens axis, will be focused to a point along that axis. This will apply to all of the rays in beam 10, including those which are far removed from the lens axis. Since all of the rays in beam 12 are parallel, they will likewise be focused to a single point on the lens focal plane, even though the rays themselves may be distributed over a substantial portion of the lens. The distance of the beam's focus point from the lens axis will vary with the angle between the beam and axis.

One embodiment of the present invention utilizes the phenomena just described to achieve a mapping of spatial beam intensities to position in a two-step process. First, the beam is processed so that a series of small output beams are produced, with the position of each output beam corresponding to a particular location in the input beam, and the directions of the output beams corresponding to the optical intensities at their respective locations in the input beam. All of the output beams for common-intensity locations of the input beam are thus parallel, and the difference in direction among different output beams will increase as the difference between the corresponding input beam intensities increase. In the second step, each set of parallel output beams is focused to respective common points in the lens focal plane, thereby producing a positional distribution corresponding to the optical intensities of the input beam.

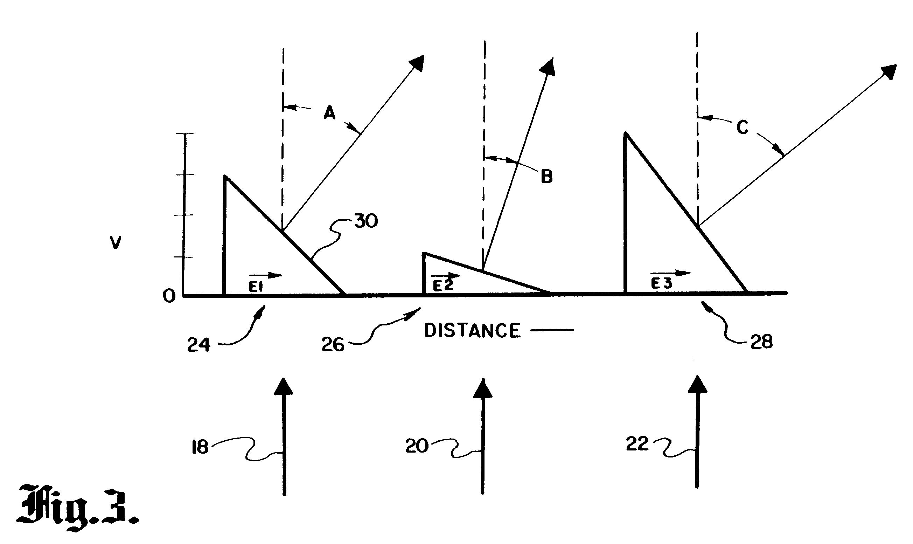

The mechanism used to control the deflections of the output beams may be conceptualized as a pattern of separate voltage gradient "modules". A series of such modules which may be used for positional mapping is shown in FIG. 3, which plots voltage against distance. Each module has an associated spatial voltage gradient transverse to the beam and an associated phase gradient, which deflects its corresponding portion of the beam by an amount which varies with the gradient magnitude. The physical apparatus used to establish the gradients is described in a later section.

Three beam pixels 18, 20 and 22 are illustrated as being directed towards modules 24, 26 and 28, respectively. Module 24 has an intermediate voltage gradient, indicated by line 30 which slopes down from an intermediate voltage level along a unit distance transverse to the input beam pixel 18. The voltage gradient produces an electric field which has a component E1 that is also transverse to pixel 18, and has an intermediate magnitude. When the voltage gradient is established through an electro-optic material, a phase gradient is established which will deflect the input light pixel 18 by an angle A which varies in positive proportion to the gradient magnitude. When an array of small modules are employed, they will operate in a manner analogous to a blazed grating, deflecting the incoming light into a Fourier array of discrete deflection angles, with the intensity of the deflected light peaking at angle A and generally progressively diminishing therefrom.

Module 26 illustrates a lower voltage gradient, with a proportionately lower electric field E2 transverse to the input pixel 20. This will produce a smaller deflection angle B. Module 28, on the other hand, has a larger voltage gradient transverse to its input pixel 22. This produces a larger electric field E3 transverse to the input light, and a correspondingly larger deflection angle C.

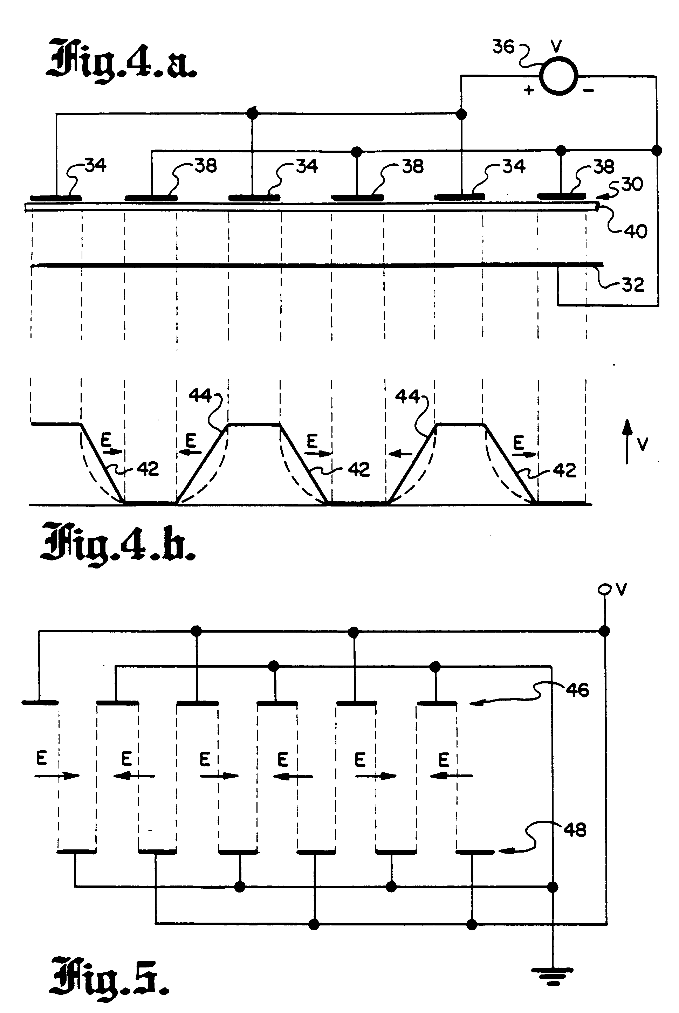

A physical set-up for establishing the spatial voltage gradients is illustrated in FIG. 4a. An array of interdigitated electrodes 30 are positioned across the gradient area from a counter electrode 32, which in this embodiment is a planar electrode. The interdigitated electrodes 30 are flat and preferably elongated into the page. Alternate electrodes 34 are connected to one side of a voltage source 36, while the intervening electrodes 38 are connected in common with the counter electrode 32 to the opposite side of the voltage source, which may be at ground potential. Each of the interdigitated electrodes is laterally spaced from its adjacent electrodes. A resistor sheet 40 may be provided in contact with each of the interdigitated electrodes to linearize the voltage gradients therebetween.

The voltage gradients produced by the electrode array is illustrated in FIG. 4b, which is vertically aligned with FIG. 4a. The solid lines 42 sloping down and to the right indicate voltage gradients having an associated electric field component E directed to the right; the solid lines 44 sloping down and to the left indicate voltage gradients having an associated electric field component E directed towards the left. The solid voltage gradient lines result from the use of resistive sheet 40; voltage gradients indicated by dashed curved lines result when no resistive sheet is used.

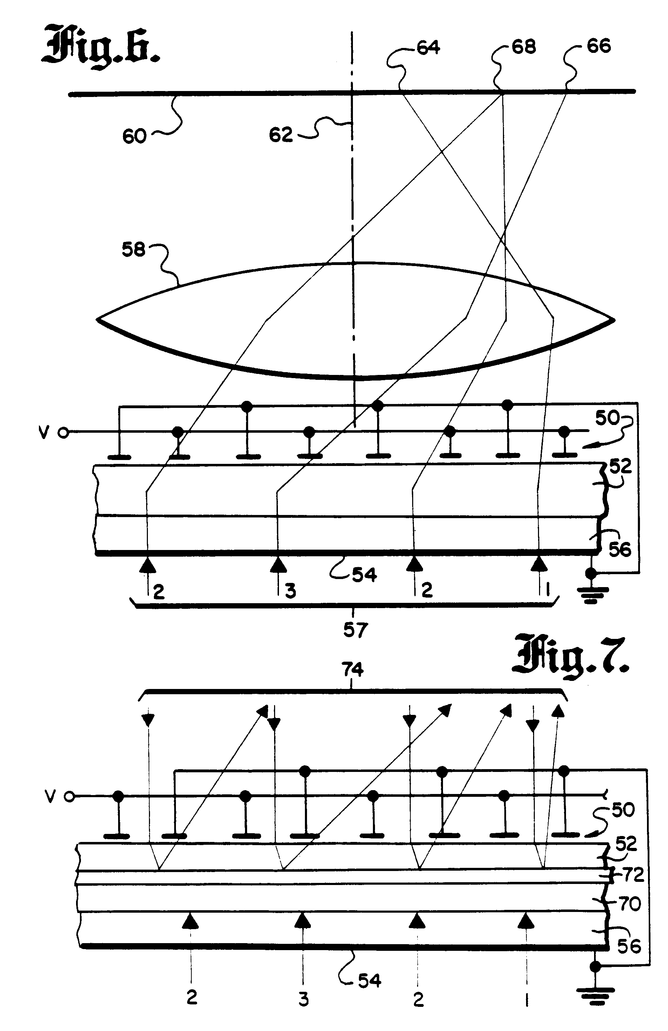

An alternate embodiment in which interdigitated electrodes 46 and 48 are employed on both sides of the voltage gradient area is illustrated in FIG. 5. In this embodiment alternate electrodes in the upper array 46 are connected to two different voltage potentials, respectively, and similar connections are made for the alternate electrodes in the lower array 48. The directions of the transverse electric field components between the two electrode arrays are indicated by arrows.

The application of the invention to a transmissive liquid crystal light valve (LCLV) is shown in FIG. 6. An interdigitated electrode array 50 is formed on a transparent glass plate (not shown) on one side of a layer of nematic liquid crystals 52, while a planar electrode 54 is formed on another glass plate (not shown) on the other side of the liquid crystal layer. A layer of photoconductive material 56 is disposed between planar electrode 54 and liquid crystal layer 52. The two sets of electrodes form a plurality of small, replicated voltage gradient modules for deflecting incoming light. A voltage differential is established between the interdigitated electrodes 50 and planar electrode 54, such as by applying a voltage V to every other one of the interdigitated electrodes 50, and grounding the intervening interdigitated electrodes and the planar counter electrode 54. With a liquid crystal medium between the electrodes, the voltage between the two electrodes would preferably be AC driven at about 10 kHz. Since the photoconductive layer 56 has a very high impedance in the absence of applied light, most of the voltage between the electrodes will normally be established across the photoconductor 56. In this embodiment both electrodes should be transparent.

An input light beam 57 is shown directed onto the underside of the planar electrode 54 and photoconductive layer 56. As used herein, the term "light" is intended in a broad sense to include any electromagnetic radiation capable of being diffracted by the electro-optic modules described herein, rather than just the visible portion of the spectrum. Although in practice it might be continuous, beam 57 is illustrated for simplicity as constituting four separate rays. One ray has a relatively low optical intensity designated 1, two rays have an intermediate optical intensity designated 2, and the last ray has a relatively high optical intensity designated 3.

As is well known, a photoconductor will become partially conductive in the presence of light, with the degree of conductance varying with the intensity of the imposed light. Also, most photoconductors are not subject to significant light spreading, and can be designed with a high transverse electrical impedance. Accordingly, the conductivity of the photoconductive layer in the path of each light ray will vary in a positive fashion with the intensity of that light ray. Specifically, the conductivity of the photoconductive layer in the vicinity of the low intensity ray will be relatively low, its conductivity in the vicinity of the two intermediate intensity rays will be of an intermediate level, and the photoconductor conductivity in the vicinity of the high intensity ray will be relatively high. A voltage divider is established between each module of the liquid crystal and the underlying portion of the photoconductive layer, and the portion of the voltage dividers attributable to the liquid crystals will vary in accordance with the conductivity of the underlying photoconductor material. Thus, the module in line with the highest intensity ray will support the greatest voltage differential through the liquid crystal layer (and therefore the greatest electric field), while the module in line with the lowest intensity ray will support the lowest voltage differential.

A pattern of voltage gradients transverse to the input light rays will thus be established through the liquid crystal layer in a fashion similar to FIG. 4b, but the magnitude of each voltage gradient will vary in accordance with the voltage divider effect between the liquid crystal and underlying photoconductive layer at that location. Thus, as the input light rays are transmitted through the photoconductive layer and their respective modules in the liquid crystal, the highest intensity ray will undergo the greatest deflection as it exits the light valve, while the lowest intensity ray will experience the lowest deflection as it exits its respective portion of the light valve. The two rays of equal intermediate intensity will each be deflected by the same intermediate angle, and will thus exit their respective modules as parallel rays. This controlled deflection implements the first step of the mapping process described previously, that of mapping the spatial distribution of light intensities onto the direction of output rays.

A lens 58 is positioned over the light valve so as to focus light emerging therefrom onto its back focal plane 60, which is centered on the lens axis 62. Because it was deflected the least upon exiting the light valve, the light ray corresponding to the lowest optical intensity will be focused onto the focal plane at point 64, nearest to the lens axis (for a practical device it will actually be focused as a series of points corresponding to a Fourier spectrum, as described further below, but the peak will be located at point 64). The ray corresponding to the highest input intensity experiences the greatest deflection, and accordingly is focused in a similar manner onto point 66 of the focal plane at a much greater distance from the lens axis. The two rays of intermediate intensity exit the light valve as parallel rays, and accordingly are focused to a common intermediate point 68 on the focal plane between points 64 and 66. Thus, the optical intensities at separate pixel locations in the original input beam are mapped onto a positional array in which increasing distance from the lens axis corresponds to pixels of increasing optical intensity, regardless of the positions of the pixels in the input beam. The original input light intensity distribution is reconstructed as a phase image in the back image plane of lens 58.

While a liquid crystal layer 52 is used in the preferred embodiment, in principle any electro-optic material could be used. An electro-optic material is defined as one whose refractive index varies with the magnitude of an applied electric field. Nematic liquid crystal presently in common use is preferred because, although its response is somewhat slower than many other materials, it exhibits the largest change in refractive index for relatively small changes in electric field. In the future "quantum well" or ferroelectric liquid crystal devices may offer the potential for faster response than is presently available with conventional nematic liquid crystals.

A reflective light valve is illustrated in FIG. 7 which is somewhat analogous to a conventional reflective liquid crystal light valve, such as that shown in U.S. Patent No. 3,824,002 to Terry D. Beard and assigned to Hughes Aircraft Company, the assignee of the present invention. Elements of this device which are common with the transmissive device of FIG. 6 are indicated by the same reference numerals. Specifically, the upper interdigitated electrode array 50, the lower planar electrode 54, the layer of nematic liquid crystal material 52 and photoconductive layer 56 are common to both devices. In addition, a light blocking layer 70 is interposed immediately above the photoconductive layer 56, and a reflecting means 72 such as a dielectric or metal matrix mirror is provided between the light blocking layer and the liquid crystal layer 52. An input light beam is applied to the underside of the structure, as in the transmissive embodiment. While the input light again provides a variable voltage divider effect with respect to the photoconductive and liquid crystal layers, the input light is blocked by layer 70 from reaching the liquid crystal. Instead, a readout light beam 74 is directed from above the structure through the transparent interdigitated electrodes 50 and liquid crystal to the underlying mirror 72, and are reflected back through the liquid crystal to emerge as output rays. The readout rays undergo two deflections, once upon entering and again upon exiting the liquid crystal layer.

The voltage gradients and electric fields transverse to the readout rays are controlled by the intensity of the input beam on the photoconductive layer immediately underlying each readout ray. Accordingly, the deflection experienced by each readout ray will vary in accordance with the immediately underlying input beam intensity, as in the transmissive embodiment. However, since each ray of the readout beam undergoes two deflections, the angular spread between the output rays will be greater than in the transmissive embodiment, resulting in a more easily resolved pattern at the focal plane of the lens (not shown) in FIG. 7. In both FIGs. 6 and 7 only the output rays which are deflected to the right are illustrated. Voltage gradients are electric fields oriented to produce deflections in the opposite direction will also be established in the liquid crystal between each of the illustrated rays. These voltage gradients will produce a positional mapping to the left of lens axis 62.

The maximum deflection, $\theta_{max}$, from one transit of the liquid crystal is given in radians by the expression:

$$\theta_{max} = \Delta n \frac{d}{a}$$

where $\Delta n$ is equal to the difference in refractive index between the extraordinary and ordinary directions (the birefringence) of the liquid crystal, d is the thickness of the liquid crystal cell, a is the electrode gap width. A typical value for $\Delta n$ is 0.22. The resolution and deflection angle produced by the device will increase with the thickness of the liquid crystal layer, but on the other hand a thicker liquid crystal will significantly slow down the device's response time. A suitable compromise for many applications will be a liquid crystal thickness in the order of 5-15 microns.

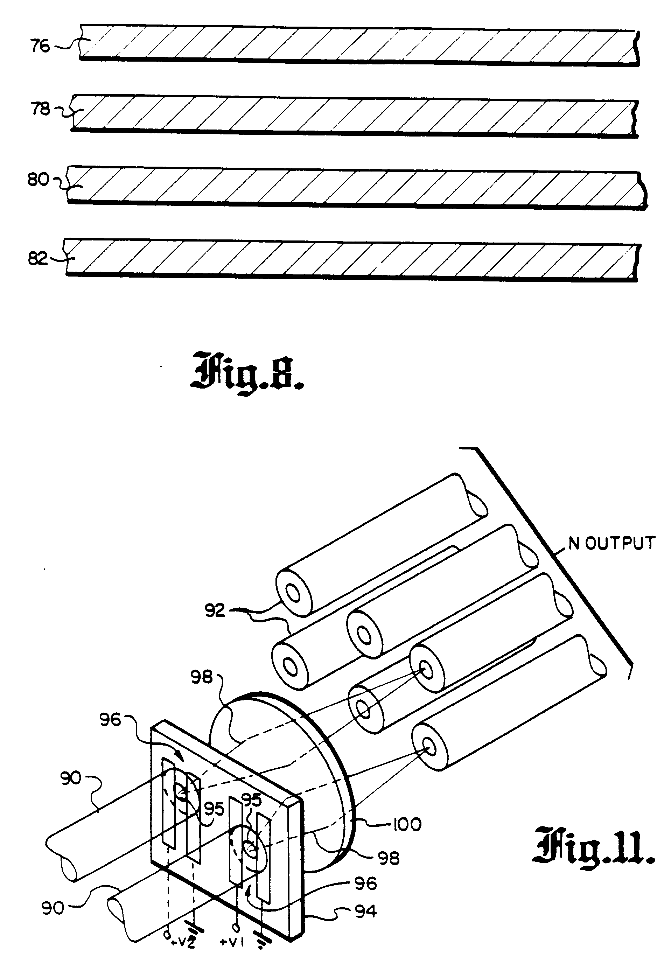

FIG. 8 illustrates a plan view of a portion of the interdigitated electrode array, consisting of elongated electrodes 76, 78, 80 and 82. The electrodes are each long enough to encompass a plurality of pixels. For good quality images it is desirable to have a large number of electrodes. For a typical light valve resolution of 20 microns, the electrode pairs will also have a periodicity of 20 microns. Thus, the width of each electrode as well as the gap between adjacent electrodes will typically be on the order of 5 microns.

In practice, with a large number of relatively narrow electrodes, the present invention will produce deflections primarily through a diffractive process analogous to a blazed grating. Blazed gratings are physically structured with tilted surfaces, that is, gradients, and are therefore not adjustable, whereas the gradients of the present invention are voltage gradients.

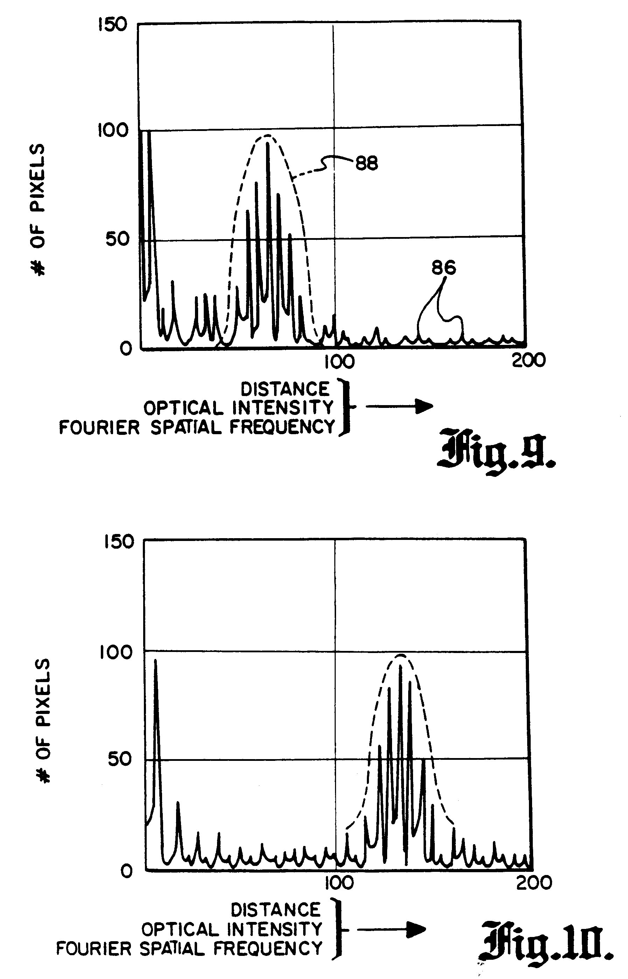

The pattern produced at the focal plane by a light valve such as that shown in FIGs. 6 or 7 is illustrated in FIGs. 9 and 10, with FIG. 9 showing a smaller deflection corresponding to a lower input light intensity. The two graphs have normalized horizontal and vertical scales. The horizontal scale corresponds to distance along the focal plane, and also to the input optical intensity and to the Fourier spatial frequency. The vertical scale indicates the number of pixels mapping onto a particular portion of the horizontal scale. All along the horizontal scale a series of minor diffraction orders 86 will be produced, due to the periodicity of the electrodes and voltage gradient modules. These discrete orders correspond to the Fourier components of the electrodes. At a location corresponding to the intensity of the input pixel, a series of elevated spikes will be mapped to form a distinct envelope 88. The width of the envelope, or in other words the number of spikes included within the envelope, varies inversely with the width of the modules formed by each electrode pair (pixel width). As the pixel's optical intensity increases or decreases, the location of the various diffractive orders will remain fixed in Fourier space, but their heights will change so that the envelope 88 moves a corresponding distance to the right or left, respectively. FIG. 10 illustrates the mapping for a pixel intensity twice that of FIG. 9. The number of resolvable deflection angles is given by the product of the maximum deflection given above and the pixel width, and is approximately 18 for the above parameter values.

Once the intensity-to-position mapping of the input beam has been achieved, any desired portion of the mapped image can be fully or partially blocked or modified. One or more intensities of interest can be simply blocked or modified by operating upon its position in the focal plane. Thus, the present invention is adaptable to all of the optical computing and logic processing that can be achieved with the aforementioned Patent No. 4,351,589, the contents of which are incorporated herein by reference. In addition, the present invention is capable of operating significantly faster than the referenced patent, and therefore over a greater temporal frequency range. The response time can be lowered to less than 10 msec., with a high output uniformity and resolution exceeding 25 line pairs per mm.

The application of the invention to a fiber optic switch is illustrated in FIG. 11. The light from individual input fibers 90 can be coupled into any one of a plurality of output fibers 92. The switching mechanism consists of a layer of electro-optic material 94, preferably liquid crystals, with each input fiber directed at a target area 95 on the liquid crystal cell. Pairs of electrodes (or a plurality of electrodes) 96 are positioned along one face of the liquid crystal cell on opposite sides of each target area 95. Voltage differentials are applied across each electrode pair, establishing electric fields in the liquid crystal transverse to the direction of light emitted from the input fibers. This produces a deflection of the input light which is a function of the electric field for each fiber. The resulting deflected output light beams 98 are focused by a lens 100 onto corresponding output fibers 92. The electric field produced by each electrode pair can be controlled from an external source, and the beams from each input fiber can be switched independently of the other input beams. Many such input fibers could be coupled via the optical deflector to a large number of output fibers. A particular input fiber could also be coupled to multiple output fibers simultaneously by spreading the light from the input fiber transverse to the electrodes before it is input to the liquid crystal deflector.

Several embodiments of the invention have thus been shown and described. However, it should be understood that numerous variations and alternate embodiments will occur to those skilled in the art. Accordingly, it is intended that the invention be limited only in terms of the appended claims.

**Claims**

1. An optical intensity mapping apparatus, comprising:

   [a] an electro-optic device for receiving input light *(18, 20, 22, 57)* whose optical intensity varies as a function of position within the beam; and

   [b] deflection control means *(56)* being responsive to the optical intensity of said input light and arranged to control said electro-optic device in such a way that optical outputs reflected or transmitted by said electro-optic device vary in direction in accordance with the respective optical input intensity;

   **characterized in that**

   [a1] said electro-optic device comprises an array of modules comprising

   [a2] a common layer of electro-optic material *(52)* and

   [a3] voltage applying means *(34, 38, 32; 46; 48; 50)* for applying within each of a plurality of predetermined areas of said layer a voltage across said electro-optic material *(52)* in a gradient direction which is transverse to said input light, each of said areas constituting a light deflecting module; and in that

   [b1] said deflection control means *(56)* is arranged to vary the magnitude of the voltage gradients of respective modules in accordance with the optical intensity at corresponding locations of said input light, wherein the direction of the optical output of each module is controlled by the magnitude of the associated spatial voltage gradient of said module.

2. Optical intensity mapping apparatus according to claim 1, **characterized in that** said voltage applying means comprises an array of interdigitated electrodes *(34, 38; 46; 50)* on one side of said layer of electro-optic material *(52),* a counter electrode *(32; 48; 54)* on the other side of said layer *(52),* and a voltage source *(36)* for applying voltages to said electrodes.

3. Optical intensity mapping apparatus according to claim 2, **characterized in that** said counter electrode *(32)* is a substantially continuous electrode opposed to said array of interdigitated electrodes *(34, 38),* said voltage source *(36)* being connected to supply a first voltage *(+)* to alternate electrodes *(34)* of said interdigitated electrodes, and a second voltage *(-)* in common to the intervening interdigitated electrodes *(38)* and to said counter electrode *(32)* (Fig.4a).

4. Optical intensity mapping apparatus according to claim 2, **characterized in that** said counter electrode *(48)* comprises a second array of interdigitated electrodes *(48)* which are offsetly opposed to said first array of interdigitated electrodes *(46),* said voltage source *(36)* being connected to supply a first voltage *(+)* in common to alternating electrodes in both arrays, and a second voltage *(−)* in common to the intervening electrodes in both arrays (Fig.4b).

5. Optical intensity mapping apparatus according to one of claims 2 to 4, **characterized in that** said electrodes *(32, 34, 38; 46, 48)* are elongated with each electrode forming part of an array of modules.

6. Optical intensity mapping apparatus according to one of claims 2 to 5, **characterized in that** said deflection control means *(56)* comprises a layer of photoconductive material (56) between said counter electrode *(32; 48; 54)* and said layer of electro-optic material *(52)*, said photoconductive material being adapted to vary the voltage gradients of respective modules across said electro-optic material *(52)* in accordance with the optical intensity at corresponding locations of said input light.

7. Optical intensity mapping apparatus according to claim 6, **characterized in that** said photoconductive material is forming a voltage divider with said electro-optic material *(52)*.

8. Optical intensity mapping apparatus according to claim 6 or 7, **characterized by** a mirror *(72)* on the photoconductive layer side of said layer of electro-optic material *(52)* with a reflective surface facing said layer of electro-optic material *(52)*, the electrodes *(50)* on the opposite side of said layer of electro-optic material *(52)* being substantially transparent.

9. Optical intensity mapping apparatus according to one of claims 1 to 8, **characterized by** a focusing means *(58)* which is disposed in the paths of the optical outputs of said modules and which is adapted to produce a positional distribution of said optical outputs corresponding to a positional mapping of the intensities of said input light.

10. Optical intensity mapping apparatus according to one of claims 1 to 9, **characterized in that** said electro-optic material *(52)* comprises liquid crystals.

11. An optical switch adapted to switch a matrix of input light beams among a plurality of output locations, comprising:

    **[a]** a layer *(94)* of electro-optic material adapted to receive the input light beams at respective target locations *(95)*;
    **[b]** electrode means *(96)* associated with said electro-optic material at each of said target locations *(95)*; and
    **[c]** means for applying voltages to said electrode means *(96)* to establish electric fields through said electro-optic material to establish voltage in a gradient direction transverse to said input light beams at each of said target locations *(95)*;
    **[c1]** said input light beams being deflected during transit through said electro-optic material to respective output locations *(92)* in accordance with the electric field strength at their respective target locations *(95)*.

12. Optical switch according to claim 11, **characterized in that** said input light beams are provided from an array of optical fibers *(90)*, wherein an array of output optical fibers *(92)* is located at said output locations for receiving the switched input beams.

13. A method of mapping the optical intensities at a plurality of pixel locations within an input optical beam, comprising:

    establishing an array of voltage gradients through an electro-optic material transverse to the beam, the voltage gradients corresponding to pixel locations within the beam,
    varying the magnitudes of the voltage gradients as a function of the optical intensities at the corresponding pixel locations, and
    processing output light through the electro-optic material, the output light being deflected by the voltage gradients in amounts which vary with the magnitudes of the respective gradients, whereby the optical intensities of the input pixels determine the directions of the respective optical outputs.

14. The method of claim 13, further comprising the step of focusing the optical outputs to a positional mapping of the input pixel intensities.

15. The method of claim 13, wherein the input beam is transmitted through the electro-optic material as the output light.

16. The method of claim 13, wherein an output beam separate from the input beam is transmitted through the electro-optic material.

17. The method of claim 13, wherein the voltage gradients are elongated in one direction and encompass a plurality of pixels in the elongated direction.

18. The method of claim 13, wherein the electro-optic material comprises liquid crystals.

**Patentansprüche**

1. Vorrichtung für die optische Intensitätskartographierung, mit

    (a) einer elektrooptischen Vorrichtung zum Empfangen von eingegebenen Licht (18, 20, 22, 57), dessen optische Intensität sich als Funktion der Position innerhalb des Strahls verändert, und
    (b) einer Ablenkungs-Steuereinrichtung (56), die auf die opotische Intensität des eingegebenen Lichts anspricht und so angeordnet ist, daß sie die elektrooptische Einrichtung derart steuert, daß sich optische Ausgangssignale, die durch die elektrooptische Einrichtung reflektiert oder durchgelassen werden, in ihrer Richtung in Abhängigkeit von der jeweiligen optischen Eingangsintensität verändern,
dadurch gekennzeichnet, daß
a1) die elektrooptische Einrichtung eine Anordnung aus Modulen enthält, die
a2) eine gemeinsame Schicht aus elektrooptischem Material (52) und
a3) eine Spannungsanlegungseinrichtung (34, 38, 32; 46; 48; 50) zum Anlegen einer Spannung entlang bzw. quer zum elektrooptischen Material (52) innerhalb einer Vielzahl von vorbestimmten Bereichen der Schicht aufweist, wobei die Spannung mit einer Gradientenrichtung angelegt wird, die quer zum eingegebenen Licht verläuft, und wobei jeder der Bereiche ein lichtablenkendes Modul bildet, und daß
b1) die Ablenkungssteuereinrichtung (56) so ausgelegt ist, daß sie die Größe der Spannungsgradienten der jeweiligen Module in Übereinstimmung mit der optischen Intensität an entsprechenden Positionen des eingegebenen Lichts variiert,
wobei die Richtung des optischen Ausgangssignals jedes Moduls durch die Größe des zugeordneten räumlichen Spannungsgradienten des Moduls gesteuert wird.

2. Vorrichtung zur optischen Intensitätskartographierung nach Anspruch 1, dadurch gekennzeichnet, daß die Spannungsanlegungseinrichtung eine Anordnung von ineinander verzahnten Elektroden (34, 38; 46; 50) auf einer Seite der Schicht aus dem elektrooptischen Material (52), eine Gegenelektrode (32; 48; 54) auf der anderen Seite der Schicht (52) und eine Spannungsquelle (36) zum Anlegen von Spannungen an die Elektroden aufweist.

3. Vorrichtung zur optischen Intensitätskartographierung nach Anspruch 2, dadurch gekennzeichnet, daß die Gegenelektrode (32) eine im wesentlichen durchgehende Elektrode ist, die der Anordnung aus den ineinander verzahnten Elektroden (34, 38) gegenüberliegt, daß die Spannungsquelle (36) so verschaltet ist, daß sie eine erste Spannung (+) an alternierende Elektroden (34) der ineinander verzahnten Elektroden sowie eine zweite Spannung (-) gemeinsam sowohl an die dazwischen liegenden ineinander verzahnten Elektroden (38) als auch an die Gegenelektrode (32) anlegt (Fig. 4a).

4. Vorrichtung zur optischen Intensitätskartographierung nach Anspruch 2, dadurch gekennzeichnet, daß die Gegenelektrode (48) eine zweite Anordnung aus ineinander verzahnten Elektroden (48) aufweist, die der ersten Anordnung aus den ineinander verzahnten Elektroden (46) mit Versatz gegenüberliegt, wobei die Spannungsquelle (36) so verschaltet ist, daß sie eine erste Spannung (+) gemeinsam an alternierende Elektroden in beiden Anordnungen und eine zweite Spannung (-) gemeinsam an die dazwischen liegenden Elektroden in beiden Anordnungen anlegt (Fig. 4b).

5. Vorrichtung zur optischen Intensitätskartographierung nach einem der Ansprüche 2 bis 4, dadurch gekennzeichnet, daß die Elektroden (32, 34, 38; 46, 48) langgestreckt sind, wobei jede Elektrode einen Teil einer Anordnung von Modulen bildet.

6. Vorrichtung zur optischen Intensitätskartographierung nach einem der Ansprüche 2 bis 5, dadurch gekennzeichnet, daß die Ablenkungssteuereinrichtung (56) eine Schicht aus photoleitendem Material (56) zwischen der Gegenelektrode (32; 48; 54) und der Schicht aus elektrooptischem Material (52) aufweist, wobei das photoleitende Material so ausgelegt ist, daß die Spannungsgradienten von jeweiligen Modulen entlang des elektrooptischen Materials (52) in Übereinstimmung mit der optischen Intensität an entsprechenden Stellen des eingegebenen Lichts variiert werden.

7. Vorrichtung zur optischen Intensitätskartographierung nach Anspruch 6, dadurch gekennzeichnet, daß das photoleitende Material mit dem elektrooptischen Material (52) einen Spannungsteiler bildet.

8. Vorrichtung zur optischen Intensitätskartographierung nach Anspruch 6 oder 7, gekennzeichnet durch einen Spiegel (62) auf der der photoleitenden Schicht entsprechenden Seite der Schicht aus elektrooptischem Material (52), wobei eine reflektierende Oberfläche der Schicht aus elektrooptischem Material (52) zugewandt ist und die Elektroden (50) auf der entgegengesetzten Seite der Schicht aus elektrooptischem Material (52) im wesentlichen transparent sind.

9. Vorrichtung zur optischen Intensitätskartographierung nach einem der Ansprüche 1 bis 8, gekennzeichnet durch eine Fokussierungseinrichtung (58), die in den Pfaden der optischen Ausgangssignale der Module angeordnet ist und so ausgelegt ist, daß sie eine positionsmäßige Verteilung der optischen Ausgangssignale entsprechend einer positionsmäßigen Kartographierung der Intensitäten des eingegebenen Lichts erzeugt.

**10.** Vorrichtung zur optischen Intensitätskartographierung nach einem der Ansprüche 1 bis 9, dadurch gekennzeichnet, daß das elektrooptische Material (52) Flüssigkristalle enthält.

**11.** Optischer Schalter, der zur Umschaltung einer Matrix aus eingegebenen Lichtstrahlen zwischen einer Vielzahl von Ausgangsstellen ausgelegt ist und aufweist:

(a) eine Schicht (94) aus elektrooptischem Material, das zur Aufnahme der eingegebenen Lichtstrahlen bei jeweiligen Zielpositionen (95) ausgelegt ist,

(b) eine Elektrodeneinrichtung (96), die mit dem elektrooptischen Material bei jeder der Zielpositionen (95) verknüpft ist, und

(c) eine Einrichtung zum Anlegen von Spannungen an die Elektrodeneinrichtung (96) zum Aufbauen von elektrischen, durch das elektrooptische Material verlaufenden Feldern zur Bereitstellung einer Spannung in einer Gradientenrichtung, die quer zu den eingegebenen Lichtstrahlen bei jeder der Zielpositionen (95) verläuft,

(c1) wobei die eingegebenen Lichtstrahlen während ihres Durchgangs durch das elektrooptische Material zu jeweiligen Ausgangspositionen (92) in Übereinstimmung mit der elektrischen Feldstärke an ihren jeweiligen Zielpositionen (95) abgelenkt werden.

**12.** Optischer Schalter, dadurch gekennzeichnet, daß die eingegebenen Lichtstrahlen durch eine Anordnung aus optischen Fasern (90) bereitgestellt werden, wobei eine Anordnung aus optischen Ausgangsfasern (92) an den Ausgangspositionen zum Aufnehmen der geschalteten Eingangsstrahlen angeordnet ist.

**13.** Verfahren zum Kartographieren bzw. Aufteilen der optischen Intensitäten an einer Vielzahl von Bildelementpositionen innerhalb eines eingegebenen optischen Strahls, bei dem:

eine Anordnung von Spannungsgradienten durch ein elektrooptisches Material quer zu dem Strahl hergestellt wird, wobei die Spannungsgradienten den Bildelementpositionen innerhalb des Strahls entsprechen,

die Größen der Spannungsgradienten als eine Funktion der optischen Intensitäten bei den jeweiligen Bildelementpositionen verändert werden, und

abgegebenes Licht durch das elektrooptische Material verarbeitet wird, wobei das abgegebene Licht durch die Spannungsgradienten mit Beträgen, die sich mit den Größen der jeweiligen Gradienten verändern, abgelenkt wird, so daß die optischen Intensitäten der Eingangs-Bildelemente die Richtungen der jeweiligen optischen Ausgangssignale bestimmen.

**14.** Verfahren nach Anspruch 13, das weiterhin den Schritt des Fokussierens der optischen Ausgangssignale auf eine positionsmäßige Kartographierung bzw. Aufteilung der eingegebenen Bildelementintensitäten enthält.

**15.** Verfahren nach Anspruch 13, bei dem der eingegebene Strahl durch das elektrooptische Material als das ausgegebene Licht übertragen wird.

**16.** Verfahren nach Anspruch 13, bei dem ein von dem eingegebenen Strahl getrennter ausgegebener Strahl durch das elektrooptische Material übertragen wird.

**17.** Verfahren nach Anspruch 13, bei dem die Spannungsgradienten in einer Richtung langgestreckt sind und eine Mehrzahl von Bildelementen in der langgestreckten Richtung umfassen.

**18.** Verfahren nach Anspruch 13, bei dem das elektrooptische Material Flüssigkristalle enthält.

**Revendications**

**1.** Appareil de représentation d'intensités optiques, comportant :

[a] un dispositif électro-optique destiné à recevoir une lumière d'entrée (18, 20, 22, 57) dont l'intensité optique varie en fonction de la position à l'intérieur du faisceau ; et

[b] un moyen (56) de commande de déflexion qui réagit à l'intensité optique de ladite lumière d'entrée et est agencé de façon à commander ledit dispositif électro-optique de manière que la direction de signaux optiques de sortie, réfléchis ou transmie par le dispositif électro-optique, varie en fonction de l'intensité d'entrée optique respective ;

caractérisé en ce que

[a1] ledit dispositif électro-optique comprend un réseau de modules comportant

[a2] une couche commune de matière électro-optique (52) et

[a3] des moyens (34, 38, 32 ; 46 ; 48 ; 50) d'application de tension destinés à appliquer, dans chacune de plusieurs zones prédéterminées de ladite couche, une tension à travers ladite matière électro-optique (52), dans une direction de gradient qui est transversale à ladite lumière d'entrée, chacune desdites zones constituant un module déflecteur de lumière ; et en ce que

[b1] ledit moyen (56) de commande de déflexion est agencé de façon à faire varier l'amplitude des gradients de tension de modules respectifs en fonction de l'intensité optique en des emplacements correspondants de ladite lumière d'entrée,

la direction du signal optique de sortie de chaque module étant commandée par l'amplitude du gradient spatial associé de tension dudit module.

2. Appareil de représentation d'intensités optiques selon la revendication 1, caractérisé en ce que lesdits moyens d'application de tension comprennent un réseau d'électrodes entrecroisées (34, 38 ; 46 ; 50) sur un côté de ladite couche de matière électro-optique (52), une contre électrode (32 ; 40 ; 54) sur l'autre côté de ladite couche (52) et une source (36) de tension destinée à appliquer des tensions auxdites électrodes.

3. Appareil de représentation d'intensités optiques selon la revendication 2, caractérisé en ce que ladite contre-électrode (32) est une électrode sensiblement continue opposée audit réseau d'électrodes entrecroisées (34, 38), ladite source de tension (36) étant connectée pour alimenter en une première tension (+) des électrodes alternées (34) desdites électrodes entrecroisées, et en une seconde tension (-) en, commun, les électrodes entrecroisées intermédiaires (38) et ladite contre-électrode (32) (figure 4a).

4. Appareil de représentation d'intensités optiques selon la revendication 2, caractérisé en ce que ladite contre-électrode (48) comprend un second réseau d'électrodes entrecroisées (48) qui sont opposées de façon décalée audit premier réseau d'électrodes entrecroisées (46), ladite source (36) de tension étant connectée pour alimenter en une première tension (+), en commun, des électrodes alternées des deux réseaux, et en une seconde tension (-), en commun, les électrodes intermédiaires des deux réseaux (figure 4b).

5. Appareil de représentation d'intensités optiques selon l'une des revendications 2 à 4, caractérisé en ce que lesdites électrodes (32, 34, 38 ; 46, 48) sont allongées, chaque électrode formant une partie d'un réseau de modules.

6. Appareil de représentation d'intensités optiques selon l'une des revendications 2 à 5, caractérisé en ce que ledit moyen (56) de commande de déflexion comporte une couche de matière photoconductrice (56) entre ladite contre électrode (30 ; 48 ; 54) et ladite couche de matière électro-optique (52), ladite matière photoconductrice étant destinée à faire varier les gradients de tension de modules respectifs, à travers ladite matière électro-optique (52) en fonction de l'intensité optique en des emplacements correspondants de ladite lumière d'entrée.

7. Appareil de représentation d'intensités optiques selon la revendication 6, caractérisé en ce que ladite matière photoconductrice forme un diviseur de tension avec ladite matière électro-optique (52).

8. Appareil de représentation d'intensités optiques selon la revendication 6 ou 7, caractérisé par un miroir (72) sur le côté à couche photoconductrice de ladite couche de matière électro-optique (52), une surface réfléchissante faisant face à ladite couche de matière électro-optique (52), les électrodes (50) sur le côté opposé de ladite couche de matière électro-optique (52) étant sensiblement transparentes.

9. Appareil de représentation d'intensités optiques selon l'une des revendications 1 à 8, caractérisé par un moyen (58) de focalisation qui est disposé sur les trajets des signaux optiques de sortie desdits modules et qui est destiné à produire une distribution de positions desdits signaux optiques de sortie correspondant à une représentation des positions des intensités de ladite lumière d'entrée.

10. Appareil de représentation d'intensités optiques selon l'une des revendications 1 à 9, caractérisé en ce que ladite matière électro-optique (52) comprend des cristaux liquides.

11. Commutateur optique destiné à commuter une matrice de faisceaux lumineux d'entrée parmi plusieurs emplacements de sortie, comportant :

[a] une couche (94) de matière électro-optique destinée à recevoir les faisceaux lumineux d'entrée en des emplacements désignés respectifs (95) ;

[b] des moyens à électrodes (96) associés à ladite matière électro-optique en chacun desdits placements désignés (95) ; et

[c] des moyens pour appliquer des tensions auxdits moyens à électrodes (96) afin d'établir des champs électriques à travers ladite matière électro-optique pour établir une tension dans une direction de gradient transversale audit faisceau lumineux d'entrée en chacun desdits emplacements désignés (95) ;

[c1] lesdits faisceaux lumineux d'entrée étant déviés durant le passage à travers ladite matière électro-optique vers den emplacements respectifs (92) de sortie en fonction de la force du champ électrique en leurs emplacements désignés respectifs (95).

12. Commutateur optique selon la revendication 11, caractérisé en ce que lesdits faisceaux lumineux d'entrée sont produits à partir d'un réseau de fibres optiques (90), dans lequel un réscau de fibres optiques de sortie (92) est place auxdits emplacements de sortie pour recevoir les faisceaux d'entrée commutés.

13. Procédé de représentation des intensités optiques en plusieurs emplacements de pixels à l'intérieur d'un faisceau optique d'entrée, consistant :

à établir un réseau de gradients de tension à travers une matière électro-optique transversalement au faisceau, les gradients de tension correspondant à des emplacements de pixels à l'intérieur du faisceau,

à faire varier les amplitudes des gradients de tension en fonction des intensités optiques aux emplacements de pixels correspondants, et

à traiter la lumière de sortie à travers la matière électro-optique, la lumière de sortie étant déviée par les gradients de tension en quantités qui varient avec les amplitudes des gradients respectifs, grâce à quoi les intensités optiques des pixels d'entrée déterminent les directions des signaux optiques respectifs de sortie.

14. Procédé selon la revendication 13, comprenant en outre l'étape qui consiste à focaliser les signaux optiques de sortie en une représentation de positions des intensités de pixels d'entrée.

15. Procédé selon la revendication 13, dans lequel le faisceau d'entrée est transmis à travers la matière électro-optique en tant que lumière de sortie.

16. Procédé selon la revendication 13, dans lequel un faisceau de sortie séparé du faisceau d'entrée est transmis à travers la matière électro-optique.

17. Procédé selon la revendication 13, dans lequel les gradients de tension sont allongés dans une direction et englobent plusieurs pixels dans la direction allongée.

18. Procédé selon la revendication 13, dans lequel la matière électro-optique comprend des cristaux liquides.

Fig.1.

Fig.2.

Fig. 3.

# Fig.4.a.

# Fig.4.b.

# Fig.5.

**Fig.6.**

**Fig.7.**

16

Fig.8.

N OUTPUT

Fig.11.

Fig.9.

Fig.10.